# EUROPÄISCHE PATENTSCHRIFT

(11) **EP 0 609 775 B1**
(45) Veröffentlichungstag und Bekanntmachung des Hinweises auf die Patenterteilung: **30.12.1998**
(21) Anmeldenummer: 94101202.3
(22) Anmeldetag: 27.01.1994
(51) Int. Cl.: C04B 35/26

(54) **Verwendung von Molybdänverbindungen bei der Herstellung von Ferriten**
Use of molybbenum compounds in the production of ferrites
Utilisation de composés du molybdène dans la production de ferrites

(30) Priorität: 03.02.1993 DE 4303073
(43) Veröffentlichungstag der Anmeldung: 10.08.1994
(73) Patentinhaber: SIEMENS MATSUSHITA COMPONENTS GmbH & CO. KG, 81617 München (DE)
(72) Erfinder: Schostek, Siegmund, Dipl.-Ing., D-85617 Assling (DE); Beer, August, Dr.Dipl.-Phys., D-82041 Deisenhofen (DE)
(74) Vertreter: Epping, Wilhelm, Dr.-Ing.

(56) Entgegenhaltungen:
- WO-A-94/14723
- DE-A- 1 696 456
- DATABASE WPI Week 9428, Derwent Publications Ltd., London, GB; AN 94-231366 & JP-A-6 168 814 (KAWASAKI STEEL CORP.) 14. Juni 1994
- DATABASE WPI Week 8625, Derwent Publications Ltd., London, GB; AN 86-159093 & JP-A-61 091 908 (FUJI ELECTROCHEM. KK.) 10. Mai 1986
- DATABASE WPI Week 9309, Derwent Publications Ltd., London, GB; AN 93-072177 & JP-A-5 021 222 (FDK CORP. LTD.) 29. Januar 1993
- DATABASE WPI Week 9302, Derwent Publications Ltd., London, GB; AN 93-012036 & JP-A-4 338 165 (FDK CORP. LTD.) 25. November 1992

## Beschreibung

Die vorliegende Erfindung betrifft die Verwendung von Molybdänverbindungen bei der Herstellung von Ferriten.

Ferrite sind keine idealen Isolatoren. Daher können bei Betreiben von induktiven elektrischen Baueelementen mit Magnetkernen aus Ferrit bei hohen Frequenzen aufgrund von induzierten Wirbelströmen ins Gewicht fallende elektrische Verluste auftreten.

Beispielsweise ist es bei Übertrager bzw. Transformatoren etwa für Schaltnetzteile von Fernsehgeräten wünschenswert, zu einem Betrieb mit höheren Frequenzen überzugehen, da dann höhere elektrische Leistungen übertragen bzw. bei gleicher übertragbarer elektrischer Leistung die Übertrager bzw. Transformatoren verkleinert werden können. Dabei steigen jedoch auch die elektrischen Verluste an.

In Magnetkernen der in Rede stehenden Art verstärken sich Wirbelströme bei zunehmender Frequenz vor allem in Bereichen, in denen der spezifische Widerstand niedrig ist. Solche Bereich entstehen, wenn einzelne Kristallite im polykristallinen Ferritgefüge in Folge von Verunreinigungen zu Riesenkristalliten verschmelzen. Eine maßgebliche Verunreinigung für die Grobkornbildung ist insbesondere Kiesel säure, die vor allem in Kombination mit hochaktivierten Ferritkörnern zu den genannten Schmelzphasen führt.

Als Ausgangsmaterial für die Herstellung von Ferriten werden unter anderem Eisenoxide verwendet, die als sogenannte Sprührösteisenoxide von der Stahlindustrie vertrieben werden. Je nach Reinigungsgrad besitzen derartige Eisenoxide unterschiedliche Kieselsäuregehalte von ca. 60 bis 300 ppm.

Es ist zwar möglich, die Eisenoxide soweit zu reinigen, daß ihr Kieselsäuregehalt an der unteren Grenze von etwa 60 ppm des vorgenannten Bereiches liegt. Die Reinigungsprozesse sind jedoch sehr aufwendig und daher teuer. Verwendet man dagegen als Ausgangsmaterial für Ferrite kieselsäurereiche Eisenoxide mit einem Kieselsäuregehalt im Bereich der oberen Grenze des oben angegebenen Bereichs, so sind Sinterprozesse schwer beherrschbar und führen nahezu immer zu Grobkornbildung und einer dadurch bedingten hohen Verlustleistung.

Der vorliegenden Erfindung liegt die Aufgabe zugrunde, Ferrite zu schaffen, die auch bei kieselsäurereichen Ausgangsmaterialien eine geringe Verlustleistung und eine hohe Sättigungsinduktion besitzen.

Diese Aufgabe wird bei einem Ferrit der eingangs genannten Art erfindungsgemäß durch die Merkmale nach Patentanspruch 1 gelöst.

Weiterbildungen der Erfindung sind Gegenstand von Unteransprüchen.

Aus den JP-A-61-91908 (91908-1986) , 5-21222 und 4-338165 ist es zwar bekannt, bei Eisenoxid als Ausgangsmaterial für Ferrite Molybdänoxid als Dotierungsstoff zuzusetzen. Diese Dokumente sagen jedoch über die Beschaffenheit des Eisenoxids nichts aus. Es ist davon auszugehen, daß es sich bereits um gereinigtes Eisenoxid handelt und die Dosierung mit Molybdän erfolgt, um bei der Ferrit-Herstellung das Kornwachstum zu hemmen, d. h. eine feinkörnige Struktur zu erhalten.

Die Erfindung wird im folgenden anhand von Ausführungsbeispielen näher erläutert.

Werden Ferrite, insbesondere Mangan-Zink-Ferrite erfindungsgemäß mit Molybdänverbindungen dotiert, so zeigt sich, daß auch bei Verwendung von kieselsäurereichen Eisenoxiden als Ausgangsmaterial die Grobkornbildung weitgehend vermieden wird. Speziell bei Verwendung von Molybdänoxid als Dotierungsstoff reichen schon geringe Mengen in der Größenordnung von Hundertstel Gew% aus, um die Grobkristallbildung bei kieselsäurereichen Eisenoxiden als Ausgangsmaterial zu vermeiden. Es hat sich gezeigt, daß bei einer Dotierung mit Molybdänoxid in einem Anteil von etwa nur 0,03 Gew% die Grobkristallbildung bereits weitgehend vermieden wird. Vermutlich beruht die Wirkung darauf, daß Molybdänoxid die Kieselsäure in Form einer inerten Verbindung, beispielsweise Molybdänsilikat desaktiviert und damit die Bildung von Schmelzphasen verhindert.

Der Erfindung zugrunde liegende Untersuchungen haben gezeigt, daß die für die Anwendungen wichtigen spezifischen Wattverluste P_{V} in mW/g als Funktion der Tempertur aufgrund der Vermeidung der Grobkornbildung in einem Temperaturbereich von 20 bis 100° C deutlich verringert werden. So haben Messungen an bestimmten Ferritmaterialien bei einer Frequenz von 100 kHz einer magnetischen Induktion von 200 mT (Millitessla) und 70° C ohne die erfindungsgemäße Dotierung mit Molybdänoxid spezifische Wattverluste P_{V} von 145 mW/g und mit der erfindungsgemäßen Dotierung mit Molybdänoxid spezifische Wattverluste von P_{V}=105 Mw/g ergeben.

Die erfindungsgemäße Dotierung mit Molybdänverbindungen bietet weiterhin den Vorteil, daß die Anfangspermeabilität der Ferrite nicht negativ beinflußt wird. Darüberhinaus können auch hohe Sättigungsinduktionswerte realisiert werden, weil sich insbesondere bei hohen Sintertemperaturen einheitliche Kristallgefüge ergeben, die aufgrund der Dotierung mit Molybdänverbindungen feinkristallin sind.

Die Molybdänverbindungen können im Prinzip irgendwann im Verlaufe von an sich bekannten Herstellungsprozessen für Ferrite zugesetzt werden. Als bevorzugt erweist es sich, wenn die Molybdänverbindungen im Herstellprozess der Ferrite vor dem Feinmahlen des vorgesinterten Ferrit-Stoffgemisches zugesetzt werden.

## Patentansprüche

1. Verwendung von Molybdänverbindungen zur Verhinderung einer Grobkristallbildung durch Deaktivieren von Kieselsäure bei der Herstellung von Ferriten aus Eisenoxiden mit einem Kieselsäuregehalt von etwa 60 bis 300 ppm.

2. Verwendung einer Molybdänverbindung nach Anspruch 1, in Form von Molybdänoxid.

3. Verwendung von Molybdänoxid nach Anspruch 2, in einem Anteil in der Größenordnung von Hunderstel Gew%.

4. Verwendung von Molybdänoxid nach Anspruch 3, mit einem Anteil von etwa 0,03 Gew%.

## Claims

1. Use of molybdenum compounds for preventing the formation of coarse crystals by deactivating silica in the preparation of ferrites from iron oxides having a silica content of about 60 to 300 ppm.

2. Use of a molybdenum compound according to Claim 1, in the form of molybdenum oxide.

3. Use of molybdenum oxide according to Claim 2, in an amount of the order of magnitude of hundredths of a % by weight.

4. Use of molybdenum oxide according to Claim 3, in an amount of about 0.03% by weight.

## Revendications

1. Utilisation de composés de molybdène pour empêcher la formation de cristaux grossiers, par désactivation d'acide silicique lors de la production de ferrites en oxydes de fer, ayant une teneur en acide silicique de 60 à 300 ppm environ.

2. Utilisation d'un composé de molybdène suivant la revendication 1, sous forme d'oxyde de molybdène.

3. Utilisation d'oxyde de molybdène suivant la revendication 2, en un ordre de grandeur du centième de pour-cent en poids.

4. Utilisation d'oxyde de molybdène suivant la revendication 3, en une proportion de 0,03 % en poids environ.
